Europäisches Patentamt

European Patent Office

Office européen des brevets

(19)

(11) Veröffentlichungsnummer: **0 267 971**
**A1**

(12) **EUROPÄISCHE PATENTANMELDUNG**
veröffentlicht nach Art. 158 Abs. 3 EPÜ

(21) Anmeldenummer: 87903478.3

(22) Anmeldetag: 23.04.87

Daten der zugrundeliegenden internationalen Anmeldung:
(86) Internationale Anmeldenummer:
**PCT/SU 87/00046**
(87) Internationale Veröffentlichungsnummer:
**WO 87/07173 (03.12.87 87/27)**

(51) Int. Cl.⁴: **A 63 J 1/00**, F 21 P 5/04

(30) Priorität: 19.05.86 SU 4076152

(43) Veröffentlichungstag der Anmeldung: 25.05.88
**Patentblatt 88/21**

(84) Benannte Vertragsstaaten: **AT CH DE FR GB IT LI SE**

(71) Anmelder: **TEATR POLIFONICHESKOI DRAMY, B. Kharitonievsky per., 22-24, Moscow, 107078 (SU)**

(72) Erfinder: **JUDENICH, Gennady Ivanovich, Serpukhovsky val, 13-9, Moscow, 113191 (SU)**

(74) Vertreter: **Patentanwälte Beetz sen. - Beetz jun. Timpe - Siegfried - Schmitt-Fumian- Mayr, Steinsdorfstrasse 10, D-8000 München 22 (DE)**

(54) **VIDEOANLAGE ZUR INFORMATIONSWIEDERGABE.**

(57) Die Videoinformationsanlage enthält eine Bildwand (1), die mindestens zwei Zellen (2 bis 5, 14 bis 16) aufweist, die schwenkbar in mindestens einer Richtung ausgeführt sind und ein sich im Raum veränderliches räumliches Mehrebenen-Bildwandsystem zusammensetzen. Den zwei oder mehreren Zellen (2 bis 5) werden die Informationen von mindestens einem Projektor zugeführt.

# VIDEOINFORMATIONSANLAGE

## Gebiet der Technik

Die vorliegende Erfindnng bezieht sich auf die Bühnenausstattung für Massenschauspiele und betrifft insbesondere eine Videoinformationsanlage.

## Bisheriger Stand der Technik

Es ist eine Vielzahl von Systemen und Anlagen bekannt, die es gestatten, eine Theateraufführung bzw. Schauunternehmung zu veranstalten, wobei es möglich ist, verschiedene Arten von Schauunternehmungen zu einem Bühnenunternehmen zu vereinigen, d.h. eine Theateraufführung mit dem Filmwesen oder Fernsehen usw. zu verbinden.

Es ist beispielsweise ein eine Kinoattraktion darstellendes System bekannt, das für eine der Weltausstellungen entwickelt wurde. Die Bildwand dieses Systems ist kuppelförmig ausgeführt, der ringförmige Zuschauerraum mit einer Kuppel abgedeckt, die als Grundlage der Lichtbildwand dient. Der Kinofilm wird durch einen speziellen Filmprojektor projeziert, der in der Mitte des Zuschauerraumes angeordnet und nach oben gerichtet wird. Die Kuppel ist ebenso wie der Fußboden des Zuschauerraumes nach einer Seite um einen Winkel von $10^{\circ}$ geneigt. Die Zuschauer sehen sich einen Kinofilm im Stehen an, wobei sie sich hinter die Reihen von Geländern stellen, die als emposteigende Ränge angeordnet sind. Die Neigung der Kuppel und des Fußbodens deutet eine Ausgangsorientierung in der Hauptrichtung der Handlung an, die um den Zuschauer herum und oben abläuft. Der Sehwinkel beträgt für die Bildwand $360^{\circ}$ in der Horizontalen und $160^{\circ}$ in der Vertikalen.

Derartiges System ist aber lediglich zweidimensional und vermittelt den Zuschauern keinen räumlichen Eindruck (s. I.B.Gordiichuk et.al. "Spravochnik kinooperatora" ("Handbuch des Kameramannes"), 1979, Verlag "Iskusstvo" (Moskau), S.67), während der Raumeindruck nur durch auf das Filmband aufgenommene Hintergründe vermittelt wird.

Es ist auch eine Mehrkamera-Fernsehanlage bekannt, die drei Projektions-Fernsehkameras enthält, von denen das Bild über einen Verteiler und eine Kontrolleinrichtung auf eine Mehrschirm-Fernseheinrichtung übertragen wird. Diese letztere Einrichtung enthält eine Vielzahl von Videomonitoren, die in der Weise angeordnet sind, daß deren Schirme in einer Ebene zu liegen kommen (s. z.B. Matsushita Electric Industrial Co., Ltd., Japan, "National Multi Vision").

Die bekannte Mehrschirm-Einrichtung kann in der Weise eingesetzt werden, daß an deren verschiedene Abschnitte verschiedene Bilder vermittelt werden.

Da der gesamte Bildschirm zusammengesetzt ausgeführt wird, so wird durch die Zuschauer zwischen dessen Einzelteilen ein Neutralstreifen wahrgenommen, der dem Gesamtbild überlagert wird und dessen Wahrnehmung als Ganzes verhindert.

Darüber hinaus ist das System zweidimensional und vermittelt keinen räumlichen Eindruck, weshalb seine Anwendung nur durch Möglichkeiten eines Fernseh-Schauspiels begrenzt ist, in dem das Raumbild durch dessen Erzeugung auf einem Videoband geschaffen wird.

Es ist auch das Prinzip der Veranstaltung von Galaaufführungen weit bekannt, in denen eine Theater- oder Konzertaufführung mit einem Film- oder Fernsehbild auf einer Bildwand bzw. einem Bildschirm vereinigt werden. Derartige Bildwand kann sowohl als Poly-Bildwand wie auch aus mehreren einzelnen Bildwänden zusammengesetzt ausgeführt werden.

Die Erweiterung von Funktionalmöglichkeiten des Theatergebäudes wurde in derartigen Systemen auf die Anwendung von in der Bühnenebene einzeln angebrachten Projektions-Flachbildwänden begrenzt, auf denen der Kinofilm lief.

- 3 -

Die Vergrößerung der Bildwandfläche zuerst auf ein Breitformat und dann auf ein Panoramabildformat (darunter auf ein rundes) vergrößerte aber die räumlichen Möglichkeiten der Bildwand in keiner Weise (s. I.B.Gordiichuk et.al., "Spravochnik kinooperatora", 1979, Verlag "Iskusstvo" (Moskau), S.64 bis 66).

Es sind Videoinformationsanlagen mit einer mehrteiligen Bildwand bekannt, die eine Vielzahl von Zellen aufweist. Auf jede Zelle oder auf deren beliebige Anzahl wird eine eigene Information von einem oder mehreren Projektoren (s. beispielsweise US, A, 3192827) gegeben.

Derartige Videoinformationsanlagen können mit einer Theater- oder Konzertaufführung leicht vereinigt werden.

In diesen Videoinformationsanlagen sind die Möglichkeiten einer räumlichen Ausweitung des Bereichs der Informationsdarstellung begrenzt, weshalb in ihnen z.B. kein grenzenlos tiefer Raum vorgetäuscht werden kann.

Offenbarung der Erfindung

Der Erfindung liegt die Aufgabe zugrunde, eine derartige Videoinformationsanlage zu schaffen, in der durch Ermöglichung der Darstellung eines Objekts in einem tiefen, sich räumlich ausweitenden, zeitlich ändernden Raum eine Erweiterung der psychologischen und emotionalen Wirkung von übertragenen Informationen auf die Zuschauer erreicht wird.

Diese Aufgabe wird dadurch gelöst, daß in der Videoinformationsanlage, die eine mehrteilige Bildwand enthält, welche mindestens zwei Zellen aufweist, auf deren jede oder auf deren beliebige Kombination eine eigene Information von mindestens einem Projektor kommt, gemäß der Erfindung mindestens zwei Zellen der mehrteiligen Bildwand mit der Möglichkeit einer Schwenkung und/oder Verschiebung im Raum in mindestens einer Richtung ausgeführt sind und ein sich im Raum änderndes räumliches

- 4 -

Mehrebenen-Bildwandsystem zusammensetzen.

Die erfindungsgemäße Videoinformationsanlage erweitert die Funktionalmöglichkeiten der ähnlichen Einrichtungen beträchtlich und vergrößert die psychologische und emotionale Wirkung der übertragenden Informationen auf die Zuschauer oder die Auszubildenden.

Ist die Videoinformationsanlage mit Dekorationsteilen vereinigt, hat es einen Zweck, die Dekorationsteile mindestens vor jeder Zelle des räumlichen Mehrebenen-Bildwandsystems anzuordnen, um einen dreidimensionalen Bühnenraum zu bilden.

Dies gestattet es, die Wirkung der Theater- oder Konzertaufführung auf die Zuschauer zu vergrößern.

Es ist zweckmäßig, in der Videoinformationsanlage, die eine mehrteilige Bildwand enthält, welche drei Zellen aufweist, von denen die erste transversal und die übrigen longitudinal ausgebildet sind, die transversale Zelle oben und quer zur mehrteiligen Bildwand anzuordnen und drehbar um die längs der Oberkante der mehrteiligen Bildwand verlaufende Achse auszuführen.

Es wird empfohlen, die erste transversale Zelle der mehrteiligen Bildwand in der Videoinformationsanlage verschiebbar nach oben und/oder nach unten bezüglich der longitudinalen Zellen auszuführen.

Es wird auch empfohlen, jede longitudinale Zelle der mehrteiligen Bildwand in der Videoinformationsanlage drehbar um die längs der zugeordneten Seitenkante der mehrteiligen Bildwand verlaufende Achse auszuführen.

Es ist möglich, jede longitudinale Zelle der mehrteiligen Bildwand in der Videoinformationsanlage verschiebbar entlang der Ebene der mehrteiligen Bildwand auszuführen.

Es ist auch möglich, jede longitudinale Zelle der mehrteiligen Bildwand in der Videoinformationsanlage verschiebbar in Richtung senkrecht zur Ebene der mehrteiligen Bildwand auszuführen.

- 5 -

Die betrachtete Ausführung der Zellen als dreh- und verschiebbar gestattet es, einen räumlich und zeitlich veränderlichen Bühnenraum zu schaffen.

Zweckmäßig ist, in der Videoinformationsanlage mit einer mehrteiligen Bildwand, die mindestens vier Zellen aufweist, von denen die erste Zelle transversal und die übrigen Zellen longitudinal ausgeführt sind, die erste transversale Zelle oben und quer zur gesamten mehrteiligen Bildwand anzuordnen und sie drehbar um die längs der Oberkante der mehrteiligen Bildwand verlaufende Achse auszuführen.

Empfehlenswert ist es, die transversale Zelle der mehrteiligen Bildwand in der Videoinformationsanlage verschiebbar nach oben und/oder nach unten auszuführen.

Empfohlen wird es auch, die transversale Zelle der mehrteiligen Bildwand in der Videoinformationsanlage verschiebbar in Richtung senkrecht zur Ebene der mehrteiligen Bildwand auszuführen.

In der Videoinformationsanlage ist es möglich, jede longitudinale mehrteilige Seitenzelle der mehrteiligen Bildwand drehbar um die längs der zugeordneten Seitenkante der mehrteiligen Bildwand verlaufende Achse auszuführen.

Ferner erwies es sich als möglich, jede longitudinale Seitenzelle der mehrteiligen Bildwand in der Videoinformationsanlage verschiebbar entlang der Ebene der mehrteiligen Bildwand auszuführen.

Es erwies sich auch als möglich, mindestens eine longitudinale Zelle in der Videoinformationsanlage zwischen den longitudinalen Seitenzellen anzuordnen und sie verschiebbar entlang der Ebene der mehrteiligen Bildwand auszuführen.

Zweckmäßig ist, in der Videoinformationsanlage mindestens eine longitudinale Zelle zwischen den longitudinalen Seitenzellen anzuordnen und sie verschiebbar in Richtung senkrecht zur Ebene der mehrteiligen Bildwand

- 6 -

auszuführen.

Zweckmäßig ist es auch, mindestens eine longitudinale Zelle in der Videoinformationsanlage zwischen den longitudinalen Seitenzellen anzuordnen und sie drehbar um die parallel zur Seitenkante der mehrteiligen Bildwand verlaufende Achse auszuführen.

In der Videoinformationsanlage kann jede Zelle eine mehrteilige Bildwand darstellen.

Die betrachteten Ausführungsformen der Zellen gestatten es ebenso wie die oben angegebenen Varianten, einen zeitlich und räumlich veränderlichen Bühnenraum zu schaffen.

Liegt der Projektor in der Videoinformationsanlage hinter den Zellen der mehrteiligen Bildwand, erwies es sich als vorteilhaft, mindestens noch einen Projektor vor mindestens einer Zelle der mehrteiligen Bildwand aufzustellen, wodurch auf diese Zelle zugleich eine Durch- und eine Aufprojektion eines Bildes abgeworfen werden.

Dies vergrößert die Menge der übertragenen Informationen, ändert deren Art und Form und verstärkt ihre Wirkung auf den Zuschauer.

Es ist auch zweckmäßig, die Videoinformationsanlage mit mindestens zwei räumlichen Mehrebenen-Bildwandsystemen zu versehen, die in einer Linie hintereinander angeordnet sind.

Möglich ist, die Videoinformationsanlage mit mindestens zwei räumlichen Mehrebenen-Bildwandsystemen zu versehen, die parallel unmittelbar nacheinander angeordnet sind.

Es ist auch möglich, die Videoinformationsanlage mit einer Gruppe von mindestens zwei räumlichen Mehrebenen-Bildwandsystemen zu versehen, die nacheinander entlang mindestens eines Teiles des Umfanges einer ersten Krummlinigen Fläche angeordnet sind.

Die Videoinformationsanlage kann schließlich mit einer zweiten Gruppe von mindestens zwei räumlichen Mehrebenen-Bildwandsystemen versehen werden, die nacheinander entlang mindestens eines Teiles des Umfanges einer zweiten krummlinigen Fläche angeordnet sind, deren Krümmungsradius größer als der Krümmungsradius der ersten krummlinigen Fläche ist.

Infolge der Anwendung der erfindungsgemäß vorgeschlagenen Videoinformationsanlage entsteht ein grundsätzlich neues Schauspiel, das sich räumlich und zeitlich verwandeln, und einen maximalen Effekt des visuellen Dabeiseins und Einbeziehens des Zuschauers in das dargebotene Bühnengeschehen erbringen kann.

Kurze Beschreibung der Zeichnungen

Die Erfindung soll durch die nachstehende Beschreibung von Ausführungsbeispielen derselben anhand der beiliegenden Zeichnungen näher erläutert werden. Es zeigt:

Fig. 1 eine erfindungsgemäße Videoinformationsanlage mit zwei longitudinalen Zellen;

Fig. 2 eine andere Ausführungsform der erfindungsgemäßen Videoinformationsanlage;

Fig. 3 eine erfindungsgemäße Videoinformationsanlage mit vier transversalen Zellen;

Fig. 4, 5 und 6 manche Einsatzmöglichkeiten für ein erfindungsgemäßes räumliches Mehrebenen-Bildwandsystem;

Fig. 7, 8 und 9 Varianten einer Kombination der Theaterdekoration mit einer mehrteiligen Bildwand, gemäß der Erfindung;

Fig. 10 eine Variante der Verbindung von einem Fernsehbild und -informationen mit einer elektronischen Rechenmaschine, gemäß der Erfindung;

Fig. 11, 12, 13 Ausführungsformen einer erfindungsgemäßen Videoinformationsanlage mit drei Bildwandsystemen;

Fig. 14 eine erfindungsgemäße Videoinformationsanlage in Form eines Bühnentriptychons;

Fig. 15 eine erfindungsgemäße Videoinformationsanlage in Form eines runden Panoramaanordnung;

Fig. 16 eine Ausführungsform von in der erfindungs-

gemäßen Videoinformationsanlage verschiebbaren Zellen.

## Bevorzugte Ausführungsform der Erfindung

Nachstehend wird auf eine Einsatzvariante der vorliegenden Erfindung für ein Schauspiel eingegangen.Deren Anwendung für andere Zwecke, darunter auch für ein Training, zieht aber keine wesentlichen Änderungen nach sich.

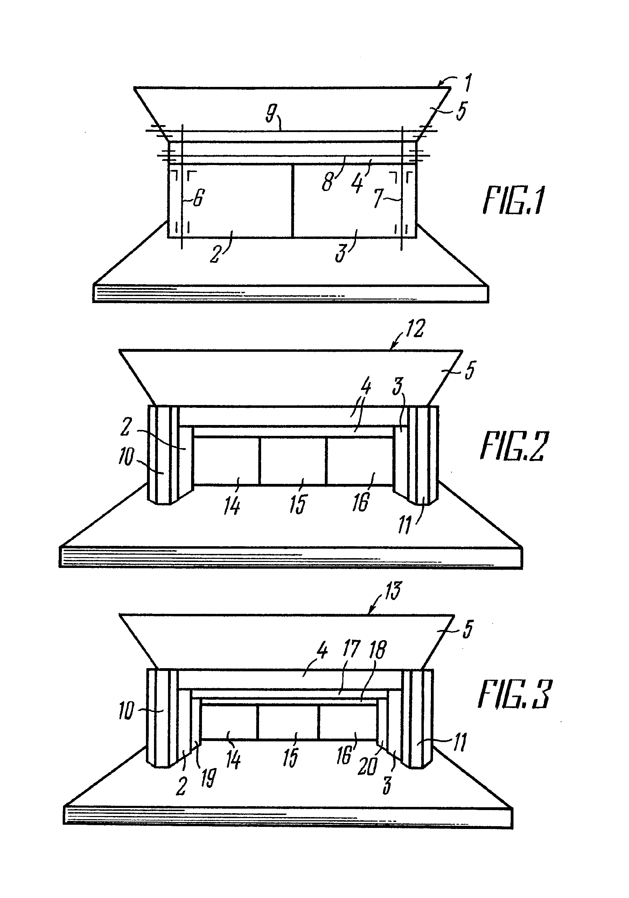

Die erfindungsgemäße Videoinformationsanlage enthält eine mehrteilige Bildwand 1 (Fig. 1), die eine Vielzahl von Zellen aufweist. Wie in der Ausführungsform in Fig. 1 gezeigt, hat die mehrteilige Bildwand 1 zwei longitudinale Zellen 2 und 3 sowie zwei transversale Zellen 4 und 5.

Sämtliche Zellen der Bildwand 1 sind mit der Möglichkeit einer Schwenkung und/oder einer Verschiebung im Raum nach mindestens einer seiner Dimensionen ausgeführt, wobei ein sich im Raum änderndes Mehrebenen-Bildwandsystem ausbildet. Die Änderung der räumlichen Lage der Zellen der Bildwand 1 erfolgt sowohl für die eine von ihnen als auch für eine Gruppe der Zellen in einer beliebigen Richtung wahlfrei in Abhängigkeit von an einer jeden von ihnen anfallenden Informationen und von deren Form sowie vom erzeugten Effekt der Wahrnehmung dieser Informationen.

Nachfolgend werden Ausführungsbeispiele eines Mehrebenensystems betrachtet, in dem eine oder mehrere Zellen räumlich verschoben oder verschwenkt sind. Durch die betrachteten Beispiele werden aber die möglichen Kombinationen der räumlichen Lagen der Zellen keineswegs erschöpft, ebenso wie nicht alle zugänglichen Kombinationen der Arten der Zellen im Rahmen einer Bildwand sind in Betracht gezogen. Das Mehrebenen-Bildwandsystem wird außerdem in Anwendung auf eine Theateraufführung betrachtet, was dessen Anwendungsmöglichkeiten ebenfalls nicht ausschöpft, wovon vorstehend gesprochen wurde.

In Fig. 1 ist, wie bereits erwähnt, die Bildwand 1

- 9 -

mit vier Zellen 2 bis 5 gezeigt. Die Zellen 2 bis 5 weisen je eine Drehachse 6, 7, 8 und 9 für die Schwenkung derselben um einen Winkel auf. Die Drehachsen 6 und 7 der Zellen 2 und 3 verlaufen entlang der Seitenkante der Bildwand 1. Die Drehachsen 8 und 9 der Zellen 4 und 5 verlaufen entlang der Obenkante der Bildwand 1.

Die Zelle 5 ist um einen Winkel von 120° in Bezug auf die Ebene der longitudinalen Zellen 2 und 3 verschwenkt gezeigt.

Da die mehrteilige Bildwand 1 für die Bühnenaufführung verwendet ist, sind längs der Seitenkanten dieser Bildwand 1 Pylonen 10, 11 angeordnet, die als Sektionen der Bildwand 1 dienen können.

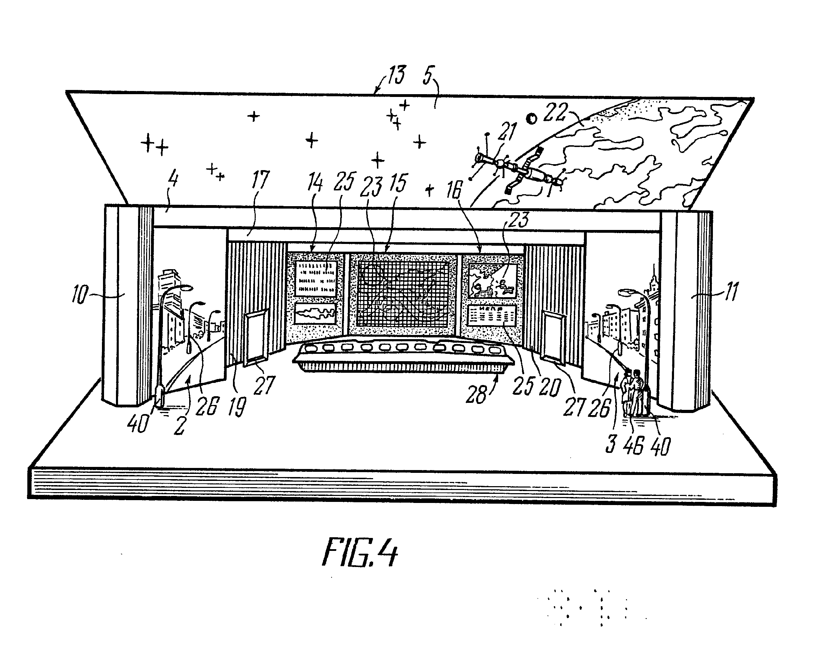

Nachstehend sind Ausführungsformen einer mehrteiligen Bildwand 12 oder 13 (Fig. 2 und 3) mit einer anderen Anzahl der Zellen betrachtet.

In Fig. 2 weist die Bildwand 12 longitudinale Zellen 2, 3, 14, 15 und 16, von denen die Zellen 2 und 3 Seitenzellen sind, und transversale Zellen 4, 5 und 17 auf, wobei die longitudinalen Zellen 14 bis 16 und die transversale Zelle 17 in die Tiefe bezüglich der Hauptebene der Bildwand 12 versetzt sind, welche Ebene im vorliegenden Beispiel mit der Ebene der transversalen Zelle 4 zusammenfällt, während sich die Zelle 17 in einer von den Ebenen der Zellen 14 bis 16 verschiedenen Ebene befindet. Darüber hinaus ist die transversale Zelle 5 nach oben bezüglich der Hauptebene der Bildwand 12 gerichtet, und die Seitenzellen 2 und 3 sind nach der Tiefe bezüglich der Hauptebene der Bildwand 12 verschwenkt.

Die in Fig. 3 dargestellte Videoinformationsanlage unterscheidet sich von den vorher betrachteten durch das Vorhandensein noch einer Gruppe von verschiebbaren Zellen, von denen die transversale Zelle 18 in die Tiefe der Bildwand 13 gegenüber der Zelle 17 verschoben und die longitudinalen Zellen 19 und 20 vor den Zellen 14 bis 16 aufgestellt und in Bezug auf diese verschwenkt sind.

Fig. 4, 5 und 6 zeigen einige Einsatzmöglichkeiten für das räumliche Mehrebenen-Bildwandsystem. In Fig. 4 sind ein Steuerpult und Informationen über den Flug eines Weltraumschiffes schematisch dargestellt. In die Zelle 5 der Bildwand 13 kommen Informationen über die Lage eines Weltraumschiffes 21 im Weltraum und bezüglich der Erde 22 in den longitudinalen Zellen 14, 15 und 16 werden benötigte Karten 23, Schemas 24 und erforderliche alphanumerische Informationen 25 dargestellt. Auf die Seitenzellen 2 und 3 sind Fragmente 26 von Stadtstraßen projiziert und in den Zellen 19 und 20 Dekorationsstücke 27 des Raumes mit dem Steuerpult 28 ausgeführt.

Vor der Bildwand 13 ist das eigentliche Steuerpult 28 angeordnet.

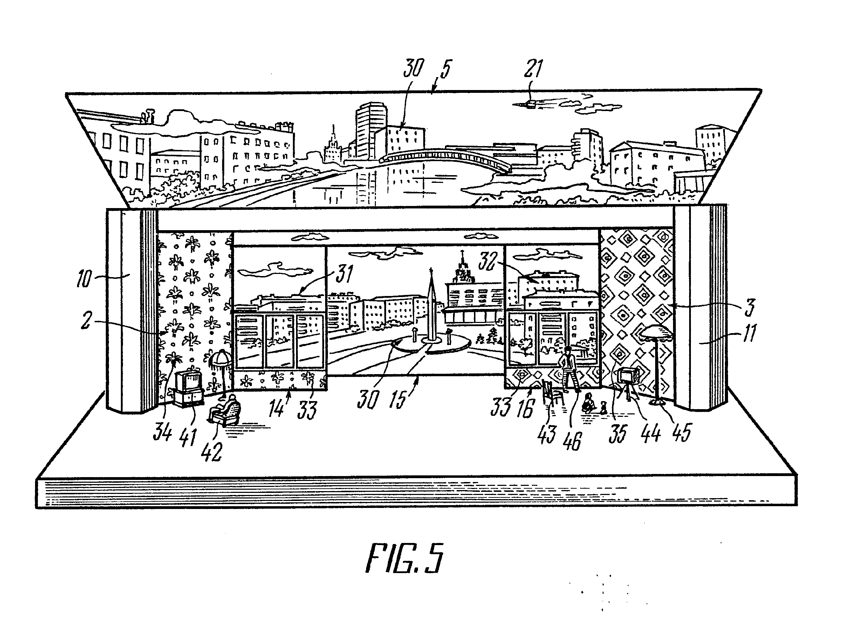

Fig. 5 zeigt die Projektion einer Wohnung in mehreren Ebenen in einem erfindungsgemäßen räumlichen Mehrebenen-Bildwandsystem. In diesem System ist die Zelle 5 der Bildwand 12 rechtwinklig zur Vertikalebene verschwenkt, die Zelle 15 in die Tiefe versetzt, und die Zellen 2 und 3 sind bezüglich der Zellen 14 und 16 verschwenkt. In der Zelle 5 ist eine Projektion 29 der Perspektive einer Stadt, in der Zelle 15 aber eine Projektion 30 der Perspektive eines anderen Stadtteiles gezeigt, die eine Fortsetzung von Projektionen 31 und 32 darstellt, welche in Form von Vitragen dargeboten sind, die aus den in den Zellen 14 und 16 befindlichen Fenstern zu sehen sind. Gleichzeitig sind in den gleichen Zellen 14 und 16 Projektionen 33 der Wände der Wohnung zu sehen, die einen Teil von in den Seitenzellen 2 und 3 befindlichen Projektionen 34, 35 anderer Wände darstellen.

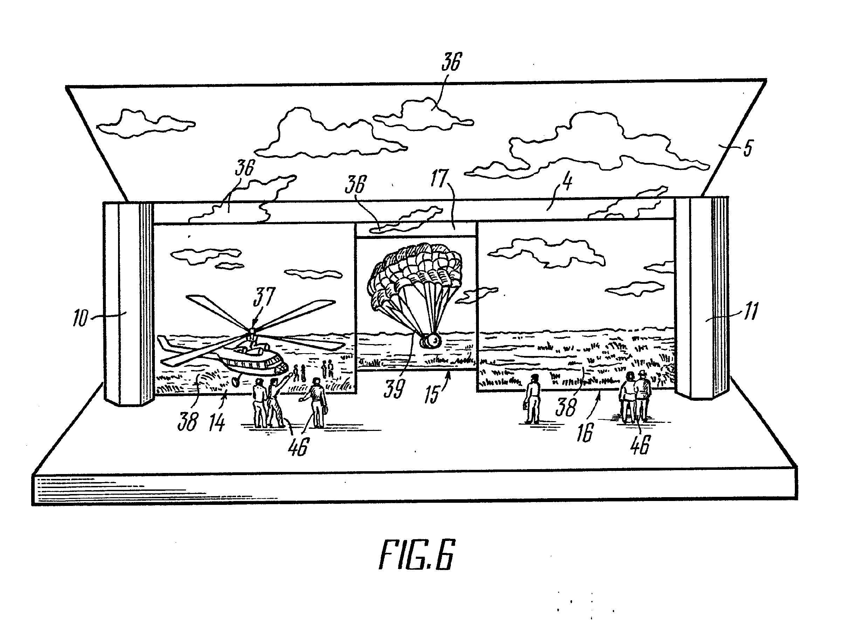

In Fig. 6 ist noch eine Projektion der Abbildung einer Videoinformation auf der Bildwand 12 dargestellt, bei der die Zelle 15 in die Tiefe versetzt und die Zelle 5 verschwenkt ist. Hierbei ist in der Zelle 5, zum Teil in der Zelle 4 und der Zelle 17 eine Projektion 36 der Himmelskuppel, in den Seitenzellen 14 und 16 sind eine Abbildung 37 eines Helikopters und eine Projektion 38 der

- 11 -

Erdoberfläche und in der Zelle 15 eine Abbildung 39 eines niedergehenden Raumflugkörpers gezeigt.

Die auf der Bildwand 1 (12 oder 13) gemäß Fig. 4 bis 6 dargestellte Videoinformation kann sich in der Zeit beliebig ändern, wodurch sich in der Zeit und im Raum ändernde Tabeln dargestellt werden. Dies sichert eine hohe psychologische und emotionale Wirkung auf den Zuschauer, indem ihm eine Illusion seines unmittelbaren Einbeziehens in das Bühnengeschehen durch eine schlagartige Änderung des Handlungsortes und durch seine Übertragung von einem Handlungsort zum anderen gemacht wird.

Um die Einwirkung auf den Zuschauer zu verstärken, werden vor einer beliebigen Zelle der Bildwand 1 Dekorationsstücke aufgestellt. In Fig. 4 sind vor den Zellen 2 und 3 Lichtmaste 40 angeordnet, die den Raumeffekt des Gesamtbildes eines Fragmentes einer Stadtstraße durch deren Deckung mit der Projektion 26 der Stadtstraße verstärken, während vor den Zellen 14 bis 16 das Pult 28 steht. In Fig. 5 dienen demselben Zweck Möbelstücke 41, 42, 43, 44, 45, die die Vorstellung von einer Wohnung vervollständigen.

Darüber hinaus kann vor der Bildwand 1 ein reales Spielgeschehen ablaufen, und daran nehmen vor den Zellen 14 bis 16 der Bildwand 12 oder 13 echte Schauspieler 46 (Fig. 4 bis 6) teil.

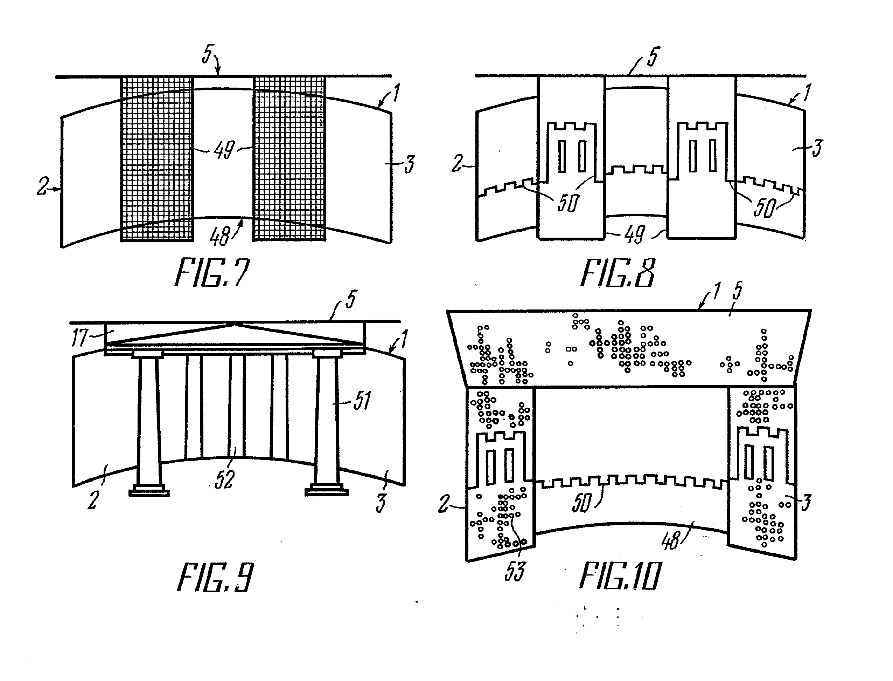

Fig. 7, 8 und 9 zeigen weitere Varianten einer Kombination einer Theaterdekoration mit der Bildwand 1, auf der beispielsweise ein Fernsehbild erscheint.

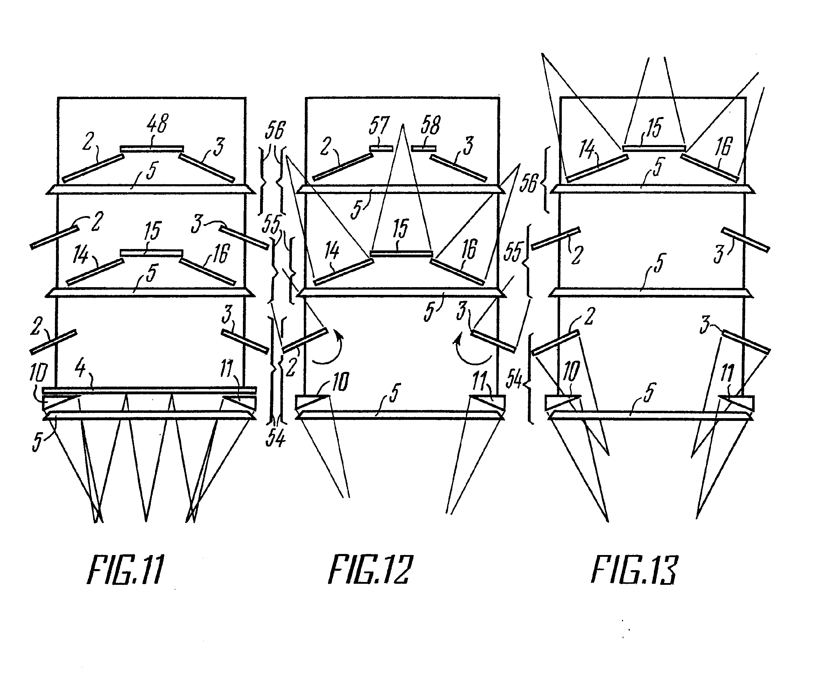

In Fig. 7 sind vor den um eine Zelle 48 verschwenkten Seitenzellen 2, 3 zusätzliche Schirme 49, beispielsweise Netzschirme, angeordnet, und in Fig. 8 ist ein für sämtliche Zellen 2, 3, 48 der Bildwand 1 und für die zusätzlichen Schirme 49 gemeinsames Fernsehbild 50 dargestellt. In Fig. 9 sind vor der Bildwand 1 Theaterdekorationsstücke 51 aufgestellt und auf der Bildwand 1 selbst ein Fernsehbild 52 dargestellt, das einen einheitlichen Eindruck mit den Dekorationsstücken 51 macht.

Fig. 10 zeigt eine Variante einer gleichzeitigen Darstellung einer Information 50 von einer elektronischen Rechenmaschine auf einer eigenen Bildwand sowie einer Information auf einer lichtdynamischen elektronischen Informationsbildwand 53.

In der vorliegenden Erfindung ist daher die Verwendung einer beliebigen, darunter auch der lichtdynamischen elektronischen Informationsbildwand oder eines Display, möglich.

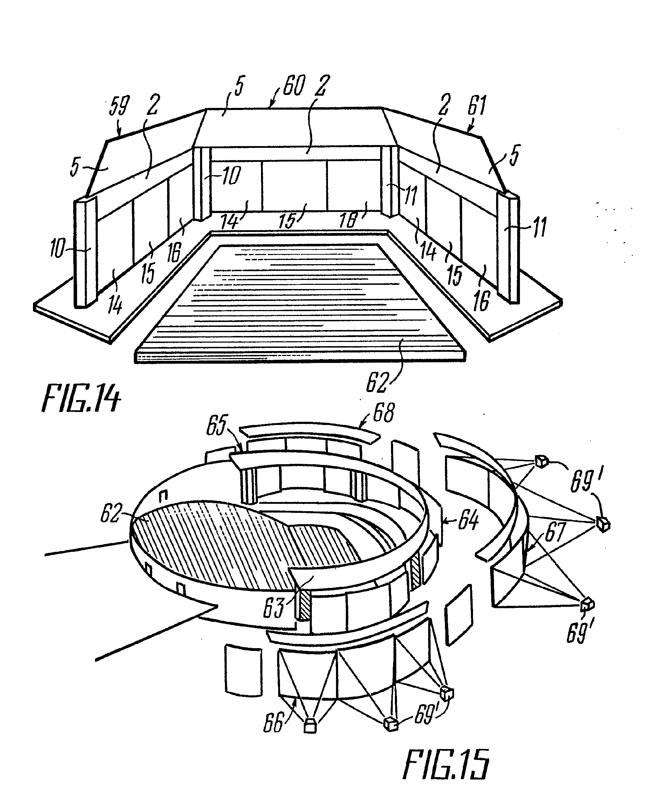

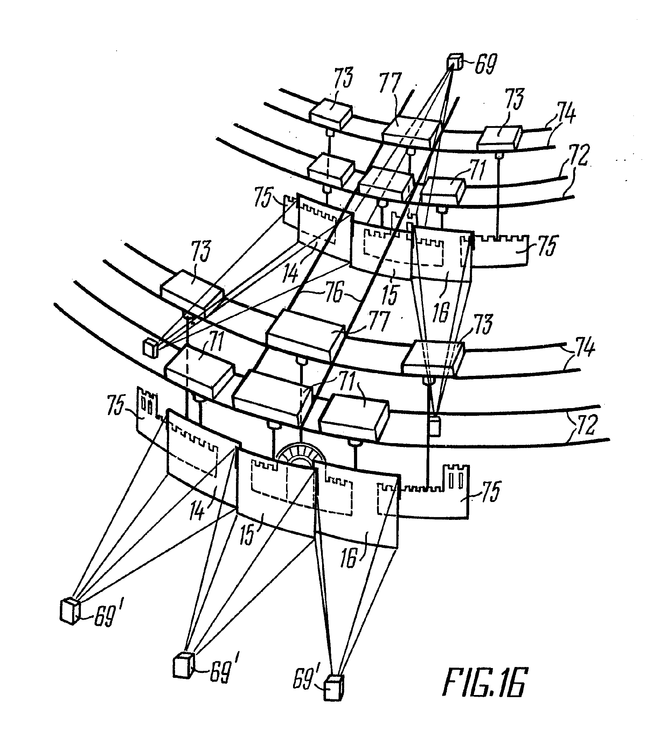

Erfindungsgemäß wird die Videoinformationsanlage aus mehreren räumlichen Mehrebenen-Bildwandsystemen ausgeführt, die entweder parallel zueinander, wie in Fig. 11, 12 und 13 angedeutet, oder unter einem Winkel zueinander (Fig. 14), oder längs zweier oder mehrerer krummliniger Flächen (Fig. 15), oder in einem Kreis (Fig. 16) angeordnet werden.

In Fig. 11 bis 13 ist eine Draufsicht einer Videoinformationsanlage mit drei Bildwandsystemen 54, 55 und 56 abgebildet, in deren jedem die Zellen 2, 3, 5, 48 ungleich liegen. Die Seitenzellen 2, 3 des Systems 54 sind z.B. verschwenkt und in die Tiefe bezüglich ihrer transversalen Zelle 5 abgeschoben, die unter einem Winkel zu ihnen liegt, während die Zelle 4 von der Zelle 5 weggeschoben ist.

Die Zellen 2 und 3, 14 und 16 des Systems 55 sind auch verschwenkt und in die Tiefe abgeschoben, während die Zellen 14, 16 in Bezug auf die Seitenzellen 2 und 3 des Systems 54 zusätzlich versetzt sind, die Zelle 15 ist bezüglich der transversalen Zelle 5 des Systems 55 versetzt, die gegenüber deren longitudinalen Zellen 2, 3, 14 bis 16 nach oben verschwenkt ist. Die Zellen 2, 3 und 48 des Systems 56 sind jeweils parallel zu den Zellen 14, 16 und 15 des Systems 55 angeordnet.

In Fig. 12 sind die Systeme 54 und 55 ähnlich ausgeführt, und im System 56 liegen in der Mitte zwei Zellen 57 und 58 mit einigem Abstand voneinander.

- 13 -

In Fig. 13 sind die Systeme 54 und 55 gleich und in Analogie zum System 54 in Fig. 12, und das System 56 ist ähnlich dem System 55 in Fig. 12 ausgeführt.

Die räumlichen Merebenen-Bildwandsysteme 59 (Fig.14), 60 und 61 liegen in einer Linie oder unter einem Winkel zueinander, wodurch ein Bühnentripytchon gebildet wird, in dessen Mitte ein Zuschauerraum 62 liegt.

In Fig. 15 sind die räumlichen Mehrebenen-Bildwandsysteme 63, 64 und 65 in einem Kreisbogen und die ähnlichen Bildwandsysteme 66, 67 und 68 in einem anderen Kreisbogen angeordnet, dessen Radius den des ersten Kreisbogens übersteigt. Hierbei liegen die Bildwandsysteme 63 bis 65 und 66 bis 68 hintereinander, um gemeinsam wahrgenommen zu werden. In der Mitte der gesamten Videoinformationsanlage befindet sich ein Zuschauerraum 62. Anstatt der Kreislinie kann eine beliebige andere krummlinige Fläche benutzt werden.

Die Informationen können auf die Videoinformationsanlage in einem beliebigen bekannten Verfahren von Projektroren 69 übertragen werden, deren Anzahl sich nach der Form der mehrteiligen Bildwand und nach der Informationsart richtet.

Es werden beispielsweise so viele Projektoren aufgestellt, wie viele Zellen zur Verfügung stehen, und jede Zelle erhält eigene Informationen. Die von einem oder mehreren Projektoren kommenden Informationen können auf den Zellen beliebig verteilt werden. Hat die Videoinformationsanlage mehrere Bildwandsysteme, wie dies beispielsweise in Fig. 11 bis 15 gezeigt ist, so ist einem jeden von ihnen eigener Projektor 69 (Fig. 16, 17) oder eine Gruppe der Projektoren 69 zugeordnet.

Auf die gleiche Zelle ist die Abbildung in Form einer Auf- und einer Durchprojektion von den Projektoren 69 bzw. 69' zugleich oder getrennt geliefert. Dadurch kann die Menge von gleichzeitig ankommenden Informationen stark vergrößert werden.

- 14 -

In Fig. 16 ist ein Ausführungsbeispiel für verschiebbare Zellen aufgeführt. Jede Zelle 14, 15, 16 der Bildwand 1 oder 12 ist in einem Rahmen 70 befestigt, der auf einem Wagen 71 angeordnet ist, der sich auf über zwei krummlinige Flächen verlegten Führungen 72 bewegt. In ähnlicher Weise werden an sich auf Führungen 74 bewegenden Wagen 73 Dekorationsstücke 75 angebracht. Die Führungen 74 verlaufen über ähnliche krummlinige Flächen wie die Führungen 72.

Um die Verschiebung der Zellen 15 in anderer Richtung zu gewährleisten, weist die Anlage Führungen 76 auf, auf denen sich der Wagen 71 der Zellen 15 bewegt. Auf diesen Führungen 76 bewegt sich auch ein Wagen 77 mit den Dekorationsstücken 75. Die Anwendung der Führungen und Wagen ist in der Bühnenausstattung für Schauunternehmungen weit bekannt.

Die Videoinformationsanlage wird wie folgt angewendet.

Betrachten wir die Arbeit der Videoinformationsanlage im Laufe einer Theateraufführung über den Start eines Weltraumschiffes.

Im Vordergrund steht das Steuerpult 28 (Fig. 4), dem sich die auf der Bühne wirkenden Schauspieler 46 frei nähern. In die Zellen 14 bis 16 kommt von den Projektoren die Abbildung einer Schautafel mit den benötigten Karten 23, Schemas 24 und Informationen 25, die sich im Vorgang der Vorführung nach der Form und inhaltlich ändern. Auf die Zelle 5 wird vom Projektor eine Information über die Lage des Weltraumschiffes 21 im Weltraum geliefert, und diese Information ändert sich auch in der Zeit.

Für den zweiten Akt der Theateraufführung sind die Lage der Zellen 2, 3, 14 bis 16 auf der Bühne und die Art der daran anfallenden Informationen geändert. Außerdem sind vor ihnen andere Dekorationsstücke aufgestellt. Der zweite Akt des Weltraumfluges spielt sich nach der Fabel in einer Wohnung ab, wobei auf die Zellen 5 und 15

- 15 -

die Abbildung von Stadtstraßen, auf die Zellen 14 und 16 dekorative Vitragen von durch die Fenster beobachteten Straßen und auf die Zellen 2 und 3 die Abbildung der Projektionen 34 und 35 der Wände der Wohnung projiziert werden. Es entstehen also mehrere Bühnenvorder- und -hintergründe: im Vordergrund eine Ansicht der Wohnung, im Hintergrund eine Ansicht der Stadtstraßen. Außerdem sind vor dem Vordergrund die Dekorationsstücke 41 bis 45 angeordnet. Der Schauspieler 46 befindet sich beim Ablauf des Spielgeschehens wahlfrei im Vorder- bzw. Hintergrund real, d.h. in dem laut Fabel erforderlichen Raum: auf der Straße, in der Wohnung, auf dem Platz usw.

In der Wohnung ist ein Fernseher 41 aufgestellt, auf dem der Flug des Weltraumschiffes beobachtet wird. Außerdem wird in der Zelle 5 das über der Stadt fliegende Raumschiff 21 selbst abgebildet.

Fig. 6 zeigt den Abschluß der Bühnenfabel über den Start des Weltraumschiffes. Hierbei sieht sich der Zuschauer gleichzeitig in verschiedenen Bühnenvorder- und -hintergründen eine reale Abbildung verschiedener sich in der Zeit und im Raum ändernder räumlicher Fabeln an: Vorbereitung einer Suchgruppe mit der Abbildung des Helikopters 37 in der den Vordergrund bildenden Zelle 14, Landung des niedergehenden Weltraumschiffes in der den Hintergrund bildenden Zelle 15, Stück der Erdoberfläche, auf dem das niedergehende Weltraumschiff landen wird, in der Zelle 16 (Vordergrund).

Der vorgeschlagene zeitliche und räumliche Ablauf des Spielgeschehens übt eine hohe psychologische und emotionale Wirkung auf die Zuschauer aus, denn er verstärkt bei ihnen die Illusion eines unmittelbaren Einbeziehens in das Bühnengeschehen.

Die erfindungsgemäße Videoinformationsanlage erfüllt Funktionen eines selbständigen, sich räumlich und zeitlich grenzenlos ändernden Raumes, der also in der Lage ist, sich zu verdoppeln, zu verdreifachen, zu vervierfa-

- 16 -

chen, wodurch sich ein zyklischer geschlossener Raum bildet.

In der Folge ergibt sich ein räumlich und zeitlich entwickelndes Schauspiel, das in Kombination mit dem lebendigen Spiel des Schauspielers befähigt ist, einen maximalen Effekt des Dabeiseins und des Einbeziehens des Zuschauers in das dargebotene Bünengeschehen zu erbringen sowie ihn augenblicklich in einen beliebigen Handlungsort zu übertragen, was den Möglichkeiten des modernen Fernsehens und Filmwesens unterliegt.

Das Vorhandensein von Monitoren im Fernsehen, die in der Lage sind, beliebige Ereignisse sowie lebendige Menschen und Schauspieler aus dem Leben unmittelbar herauszugreifen und sie momentan von der Bühne auf die Bildwandebene zu übertragen, verleiht z.B. der vorliegenden Videoinformationsanlage eine grenzenlose Manövrierfähigkeit und Vielseitigkeit bei der Wiedergabe von Situationen auf der Bildwand sowie gibt mit Hilfe elektronischer Tricks die Möglichkeit, zu programmieren, d.h. Aufgaben aus der Sicht des Spielleiters sowie Informationsaufgaben im voraus zu stellen, indem sie simuliert und Computerprogramme für zukünftige Auftritte, Ereignisse sowie extremale Lebenslagen erstellt werden.

Zur selben Zeit gibt die Anwendung der vorliegenden Videoinformationsanlage die Möglichkeit, sich Bühnenhintergrundbilder, die die Haupthandlung begleiten, sowie Ereignisse von vor dem Zuschauer verborgenen Bühnenbildern anzusehen, die in anderen Raumebenen vor sich gehen.

Darüber hinaus werden die Informationen bei der Erzeugung aller oben aufgezählten Effekte durch die vorliegende Videoinformationsanlage praktisch für einen vollen Sehwinkel des menschlichen Auges (etwas wenger als 180°) geliefert, während sämtliche bekannten Sichtsysteme einen Sehwinkel von höchstens 90° ermöglichen, was ebenfalls für die Vorteile der genannten Videoinformationsanlage spricht.

Zur Verdeutlichung wurden Beispiele des Einsatzes der vorliegenden Videoinformationsanlage für eine Theateraufführung angeführt. Ganz ähnlich kann sie in einem Ausstellungskomplex, angewandt werden, um eine sich in der Zeit ändernde räumliche Information zu erzeugen, was es gestattet, die gewünschte Ausstellungsinformation interessanter und farbenprächtiger zu gestalten. Darüber hinaus kann die Videoinformationsanlage als Trainingsgerät für die Kaderausbildung und -vorbereitung in verschiedenen Bereichen der Wissenschaft und Technik unter einer Massenerfassung von Auszubildenden und unter Schaffung von praxisnahen Bedingungen und Situationen, darunter auch für das Treffen von Entscheidungen bei einer Zeitnot, eingesetzt werden, wobei sich die Informationen zur Ausbildung räumlich und zeitlich ändern können.

## Industrielle Anwendbarkeit

Am effektivsten kann die vorliegende Erfindung für Theateraufführungen bzw. Schauunternehmungen, im Filmwesen und Fernsehen, für die Veranstaltung von Ausstellungen, für die Reklame sowie als Trainingsgeräte für die Simulierung einer Lage für das Training, die der realen am nächsten kommt, angewendet werden.

- 18 -

PATENTANSPRÜCHE

1. Videoinformationsanlage mit einer mehrteiligen Bildwand (1), die mindestens zwei Zellen (2, 3, 4, 5) aufweist, auf deren jede oder auf deren beliebige Kombination eine eigene Information von mindestens einem Projektor (69) kommt, dadurch g e k e n n z e i c h - n e t, daß mindestens zwei Zellen (2 bis 5) der mehrteiligen Bildwand (1) mit der Möglichkeit einer Schwenkung und/oder Verschiebung im Raum in mindestens einer Richtung ausgeführt sind und ein sich im Raum änderndes räumliches Mehrebenen-Bildwandsystem zusammensetzen.

2. Videoinformationsanlage nach Anspruch 1 mit einer mehrteiligen Bildwand (1), die drei Zellen (2, 3, 4) aufweist, von denen die erste als transversale Zelle (4) und die übrigen als longitudinale Zellen (2, 3) ausgebildet sind, dadurch g e k e n n z e i c h n e t, daß die erste oben und quer zur mehrteiligen Bildwand (1) angeordnete transversale Zelle (4) drehbar um eine parallel zur Oberkante der mehrteiligen Bildwand (1) verlaufende Achse (8) ausgeführt ist.

3. Videoinformationsanlage nach Anspruch 2, dadurch g e k e n n z e i c h n e t, daß die erste transversale Zelle (4) der mehrteiligen Bildwand (1) verschiebbar nach oben und/oder nach unten bezüglich der longitudinalen Zellen (2, 3) ausgeführt ist.

4. Videoinformationsanlage nach Anspruch 2 oder 3, dadurch g e k e n n z e i c h n e t, daß jede longitudinale Zelle (2, 3) der mehrteiligen Bildwand (1) drehbar um eine längs der zugeordneten Seitenkante der mehrteiligen Bildwand (1) verlaufende Achse (6, 7) ausgeführt ist.

5. Videoinformationsanlage nach Anspruch 2 oder 3, dadurch g e k e n n z e i c h n e t, daß jede longitudinale Zelle (2, 3) der mehrteiligen Bildwand (1) verschiebbar entlang der Ebene der mehrteiligen Bildwand (1) ausgeführt ist.

6. Videoinformationsanlage nach Anspruch 4, dadurch g e k e n n z e i c h n e t, daß jede longitudinale Zelle (2, 3) der mehrteiligen Bildwand (1) verschiebbar entlang der Ebene der mehrteiligen Bildwand (1) ausgeführt ist.

7. Videoinformationsanlage nach Anspruch 2 oder 3, oder 6, dadurch g e k e n n z e i c h n e t, daß jede Zelle (2 bis 4) der mehrteiligen Bildwand (1) verschiebbar in Richtung senkrecht zur Ebene der mehrteiligen Bildwand (1) ausgeführt ist.

8. Videoinformationsanlage nach Anspruch 4, dadurch g e k e n n z e i c h n e t, daß jede Zelle (2 bis 4) der mehrteiligen Bildwand (1) verschiebbar in Richtung senkrecht zur Ebene der mehrteiligen Bildwand (1) ausgeführt ist.

9. Videoinformationsanlage nach Anspruch 5, dadurch g e k e n n z e i c h n e t, daß jede Zelle (2 bis 4) der mehrteiligen Bildwand (1) verschiebbar in Richtung senkrecht zur Ebene der mehrteiligen Bildwand (1) ausgeführt ist.

10. Videoinformationsanlage nach Anspruch 1 mit einer mehrteiligen Bildwand (12), die mindestens vier Zellen (2 bis 4, 14 bis 16) aufweist, von denen die erste Zelle (4) transversal und die übrigen Zellen (2, 3, 14 bis 16) longitudinal ausgebildet sind, dadurch g e - k e n n z e i c h n e t, daß die erste oben und quer zur gesamten mehrteiligen Bildwand (12) angeordnete transversale Zelle (4) drehbar um die längs der Oberkante der mehrteiligen Bildwand (12) verlaufende Achse (8) ausgeführt ist.

11. Videoinformationsanlage nach Anspruch 10, dadurch g e k e n n z e i c h n e t, daß mindestens eine longitudinale Zelle (2, 3, 14 bis 16) der mehrteiligen Bildwand (12) verschiebbar entlang der Ebene der mehrteiligen Bildwand (12) ausgeführt ist.

12. Videoinformationsanlage nach Anspruch 9 oder 10, dadurch g e k e n n z e i c h n e t, daß mindestens

eine Zelle (2 bis 4, 14 bis 16) der mehrteiligen Bildwand (12) verschiebbar in Richtung senkrecht zur Ebene der mehrteiligen Bildwand (12) ausgeführt ist.

13. Videoinformationsanlage nach Anspruch 9 oder 10, dadurch g e k e n n z e i c h n e t, daß mindestens eine Zelle (2 bis 4, 14 bis 16) der mehrteiligen Bildwand (12) verschiebbar nach oben und/oder nach unten ausgeführt ist.

14. Videoinformationsanlage nach Anspruch 12, dadurch g e k e n n z e i c h n e t, daß mindestens eine Zelle (2 bis 4, 14 bis 16) der mehrteiligen Bildwand (12) verschiebbar nach oben und/oder nach unten ausgeführt ist.

15. Videoinformationsanlage nach Anspruch 9 oder 10, oder 14, dadurch g e k e n n z e i c h n e t, daß jede longitudinale Zelle (2, 3, 14 bis 16) der mehrteiligen Bildwand (12) drehbar um die parallel zur Seitenkante der mehrteiligen Bildwand (12) verlaufende Achse (6, 7) ausgeführt ist.

16. Videoinformationsanlage nach Anspruch 12, dadurch g e k e n n z e i c h n e t, daß jede longitudinale Zelle (2, 3, 14 bis 16) der mehrteiligen Bildwand (12) drehbar um die parallel zur Seitenkante der mehrteiligen Bildwand (12) verlaufende Achse (6, 7) ausgeführt ist.

17. Videoinformationsanlage nach Anspruch 13, dadurch g e k e n n z e i c h n e t, daß jede longitudinale Zelle (2, 3, 14 bis 16) der mehrteiligen Bildwand (12) drehbar um die parallel zur Seitenkante der mehrteiligen Bildwand 12 verlaufende Achse ausgeführt ist.

18. Videoinformationsanlage nach einem beliebigen der Absprüche 1, 2, 3, 6, 8 bis 11, 12, 16, 17 dadurch g e k e n n z e i c h n e t, daß jede Zelle (2 bis 15, (14 bis 16) der mehrteiligen muldwand (1, 2, 13) eine mehrteilige Bildwand darstellt.

19. Videoinformationsanlage nach einem beliebigen der Ansprüche 1 bis 3, 6, 8 bis 11, 12, 16, 17, die mit Dekorationsstücken (40 bis 45) vereinigt ist, dadurch g e k e n n z e i c h n e t , daß die Dekorationsstücke (40 bis 45) mindestens vor jeder Zelle (2, 3, 14 bis 16) eines räumlichen Mehrebenen-Bildwandsystems angeordnet sind, wodurch ein Bühnenraum gebildet wird.

20. Videoinformationsanlage nach Anspruch 18, die mit Dekorationsstücken (40 bis 45) vereinigt ist, dadurch g e k e n n z e i c h n e t , daß die Dekorationsstücke (40 bis 45) mindestens vor jeder Zelle (2, 3, 14 bis 16) eines räumlichen Mehrebenen-Bildwandsystems angeordnet sind, wodurch ein Bühnenraum gebildet wird.

21. Videoinformationsanlage nach einem beliebigen der Ansprüche 1 bis 20, dadurch g e k e n n z e i c h - n e t , daß sie mindestens zwei räumliche Mehrebenen-Bildwandsysteme (59 bis 61) aufweist, die in einer Linie hintereinander angeordnet sind.

22. Videoinformationsanlage nach einem beliebigen der Ansprüche 1 bis 20, dadurch g e k e n n z e i c h n e t, daß sie mindestens zwei räumliche Mehrebenen-Bildwandsysteme (54, 55, 56) aufweist, die parallel unmittelbar nacheinander angeordnet sind.

23. Videoinformationsanlage nach einem beliebigen der Ansprüche 1 bis 20, dadurch g e k e n n z e i c h - n e t , daß sie eine Gruppe von mindestens zwei räumlichen Mehrebenen-Bildwandsystemen (63 bis 65) aufweist, die nacheinander entlang mindestens eines Teiles des Umfanges einer krummlinigen Fläche angeordnet sind.

24. Videoinformationsanlage nach Anspruch 21 oder 22, oder 23, dadurch g e k e n n z e i c h n e t , daß sie eine zweite Gruppe von mindestens zwei räumlichen Mehrebenen-Bildwandsystemen (66, 67, 68) aufweist, die nacheinander entlang mindestens eines Teiles des Umfanges einer zweiten krummlinigen Fläche angeordnet sind, deren Krümmungsradius größer als der Krümmungsradius der ersten krummlinigen Fläche ist.

00267971

FIG.1

FIG.2

FIG.3

FIG.4

FIG.5

0 0 2 6 7 9 7 1

FIG.6

FIG.7

FIG.8

FIG.9

FIG.10

0026797'1

FIG.13

FIG.12

FIG.11

FIG.14

FIG.15

FIG.16

# INTERNATIONAL SEARCH REPORT

International Application No PCT/SU 87/00046

## I. CLASSIFICATION OF SUBJECT MATTER (if several classification symbols apply, indicate all)

According to International Patent Classification (IPC) or to both National Classification and IPC

IPC $^4$: A 63 J 1/00, F 21 P 5/04

## II. FIELDS SEARCHED

### Minimum Documentation Searched [7]

| Classification System | Classification Symbols |
|---|---|
| IPC $^4$: | A 63 J 1/00, 5/00, 5/02, 5/10, 13/00, 19/00, 23/00, 23/02, F 21 P 5/00-5/04, E 04 H 3/00, 3/22-3/30, G 09 B 9/00-9/08, A 63 J 1/02 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 3192827 (Elemer Nagy) 06 July 1965, see figures 8,9 | 1 |
| A | US, A, 3069970 (Tobie William Pierson) 25 December 1962, see figure 1 | 4 |
| A | FR, A1, 2323422 (HOSSEIN Robert) 8 April 1977, see figure 2 | 19 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 29 July 1987 (29.07.87) | 17 August 1987 (17.08.87) |
| International Searching Authority | Signature of Authorized Officer |
| ISA/SU | |

Form PCT/ISA/210 (second sheet) (January 1985)